Europäisches Patentamt

European Patent Office

Office européen des brevets

(11) Publication number: **0 135 977**
A2

(12) # EUROPEAN PATENT APPLICATION

(21) Application number: **84300754.3**

(22) Date of filing: **07.02.84**

(51) Int. Cl.⁴: **B 65 G 47/46,** B 65 G 47/74

(30) Priority: **21.07.83 GB 8319658**

(43) Date of publication of application: **03.04.85**
**Bulletin 85/14**

(84) Designated Contracting States: **AT BE CH DE FR GB IT LI LU NL SE**

(71) Applicant: **Cadbury Ireland Limited, Coolock, Dublin 5 (IE)**

(72) Inventor: **Poley, John, 2, Cedar Close Melbourn, Royston Hertfordshire (GB)**

(74) Representative: **Nash, Keith Wilfrid et al, KEITH W. NASH & Co. Pearl Assurance House 90-92 Regent Street, Cambridge CB2 1DP (GB)**

(54) **Article distributing mechanism.**

(57) Apparatus is provided by which articles being conveyed in a first direction can be transferred to a selected one of a number of conveyors travelling in other directions. A transfer conveyor receives the articles from a conveyor travelling in the first direction, and carries the articles past the other conveyors. A control is provided to activate the interception device associated with the selected (output) conveyor, and this device removes the article from the transfer conveyor so that it can move on to the selected output conveyor.

Title: Apparatus for handling articles

DESCRIPTION

Field of invention

This invention concerns apparatus for handling articles and in particular is concerned with a device by which articles travelling along a first path in one direction can be selectively delivered to one or more of a plurality of second paths.

Background to the invention

It is known to selectively remove articles from a first conveyor onto a second conveyor running at an angle to the second conveyor, typically perpendicular to the first conveyor, and at a lower level than the first conveyor, by deflecting articles occupying different positions across the width of the first conveyor laterally over the edge thereof so as to either drop over the edge of the first conveyor directly onto one or another of two or more lower conveyors or via chutes (or even intermediate conveyors) onto the said second lower conveyors. Such mechanisms are suitable for articles which will not be damaged by the deflection and deposition processes described, but are not always appropriate where relatively fragile or easily damaged articles are concerned.

It is an object of the invention to provide apparatus as aforesaid which will selectively deliver articles along one of two or more second paths displaced from a plane

0135977

- 2 -

containing the first path and angled thereto in response to selection control signals.

It is another object of the present invention to provide apparatus for handling articles as aforesaid which will reliably redirect articles travelling along a first path in a first direction onto one of two or more second paths at a different level and at an angle to the direction of movement along the said first path.

Summary of the invention

According to one aspect of the present invention, apparatus for handling articles and selectively transferring them from movement along one path to movement along one of a plurality of different paths comprises:

1) input means adapted to move articles along the said first path;

2) transfer conveyor means movable past the input means and adapted by means of catchment devices located therealong to receive articles from the input means;

3) at least two output paths, extending at a different level to the first path and at an angle to the direction thereof, the transfer conveyor serving to move articles from the input means to a delivery region located above the output paths,

4) means operable selectively to intercept the catchment devices as they pass through the delivery region and to cause articles located on the catchment devices to be transferred to one or another of the said output paths;

and

5) selective control means for selectively enabling operation of the interception means.

By arranging the level at which the catchment devices receive articles from the input means to be substantially the same as the level at which the articles are located along the said first path, the articles are not required to drop through any significant distance onto the catchment devices. Likewise by arranging the locus of the catchment devices to be just above the output path (albeit at an angle thereto), and the intercepting means to act so as to cause the articles to slide off the catchment devices onto the output path, the articles can be transferred thereto without any requirement to drop through any significant distance.

It is a feature of apparatus constructed in accordance with the invention that the articles are reorientated during the transfer from the input to the output without rotation relative to any supporting surface so that each of a plurality of articles aligned along the first path so as, for example, to arrive broadside-on to the transfer conveyor means, will be aligned along their selected output path or paths with their length dimensions (previously perpendicular to the direction of travel) orientated relative to the original direction of travel by an angle equal to that which exists between the first and the output paths respectively. Where this angle is a right angle, it will be seen that articles presented broadside to the apparatus will leave the apparatus with their length dimensions aligned with the direction of their output path or paths. For all other angles, such articles will move along the output path with their length dimensions angled to the direction of movement along their output path.

Since the apparatus according to the invention can selectively transfer articles without any significant drop and without any significant sliding movement relative to a supporting surface, the apparatus is of particular application to the handling of fragile articles such as bars of confectionery, particularly when the latter are not fully hardened or are inherently damageable due to their consistency or construction.

Although this advantage of the invention has been referred to in the context of damageable foodstuffs, it is to be understood that the invention is not limited to use with such articles.

In a preferred embodiment of the invention, apparatus as aforesaid includes a plurality of delivery regions for selectively delivering articles to one or another of a plurality of output paths.   To this end apparatus as aforesaid includes at least one article intercepting means for each output path, each said article intercepting means being separately operable to remove articles from catchment devices of the transfer conveyor as they pass thereover so that selected ones of a plurality of articles located on a corresponding plurality of said catchment devices along the transfer conveyor, can be deposited on to different selected output paths.

Apparatus constructed in accordance with the invention may therefore be adapted to handle a single line of articles arriving at the input means and to deliver same along either a single outlet path or along two or more different outlet paths (which may or may not be parallel).

Alternatively such apparatus may be adapted to handle a plurality of separate parallel lines of articles arriving at the input means either along a single path or along a plurality of paths, and by providing a sufficient number of separate catchment devices across the width of the transfer conveyor (and by arranging that the latter is of a sufficient width) so the apparatus can deliver a plurality of articles presented thereto to one or another of a plurality of separate output paths.

The features of the invention are incorporated in the apparatus shown in the accompanying drawings which will now be referred to and described by way of example.

Fig. 1. is a side elevation of article handling apparatus incorporating the invention when viewed from the outlet side thereof;

Fig. 2. is a similar view to an enlarged scale of the input end of the apparatus of Fig.1;

Fig. 3. is a view to a still larger scale of a side wall of the input end of the apparatus of Fig. 1 showing means for tensioning the conveyor belt;

Fig. 4. is a further side view to an enlarged scale of the end of the apparatus of Fig. 1 opposite to the input end shown in Fig. 3;

Fig. 5. is a view to an enlarged scale of one of the output conveyors of the apparatus of Fig.1;

Fig. 6. is a view at right angles to the line of the output conveyor of Fig. 5 showing the mechanism by which articles are intercepted on the transfer conveyor and transferred to the output conveyor;

Fig. 7. is a view to an enlarged scale of the mechanism near the input end of the apparatus of Fig. 1 for diverting articles from the transfer conveyor;

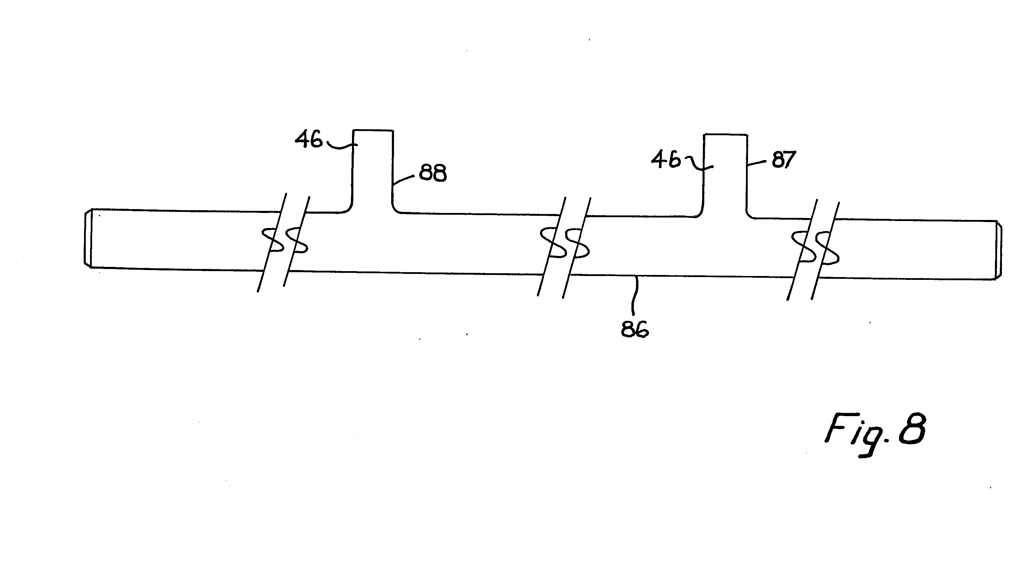

Fig. 8. is a view of the diverting device of Fig. 7;

Fig. 9. is an axial end view of a transverse elongate conveyor member having attached thereto an article catchment device for use in the transfer conveyor of Fig. 1;

Fig. 10. shows in cross section an end of one of the transverse elongate members which make up the transfer conveyor;

Fig. 11. is an axial cross section through the elongate member and catchment device of Fig. 10;

Fig. 12. is a cross section through the opposite end of the elongate conveyor member of Fig. 10;

Fig. 13. is a side elevation, somewhat condensed, showing how the transfer conveyor is constructed and guided;

Fig. 13a is a fragmentary plan view of part of the guide of Fig. 13;

Figs. 14 & 15. are views at right angles to the view of Fig. 13 of the upper and lower guiding regions of the apparatus shown in Fig. 13; and

Fig.16 shows a control system to synchronise the transfer conveyor with the arrival of the articles.

Detailed description of the drawings

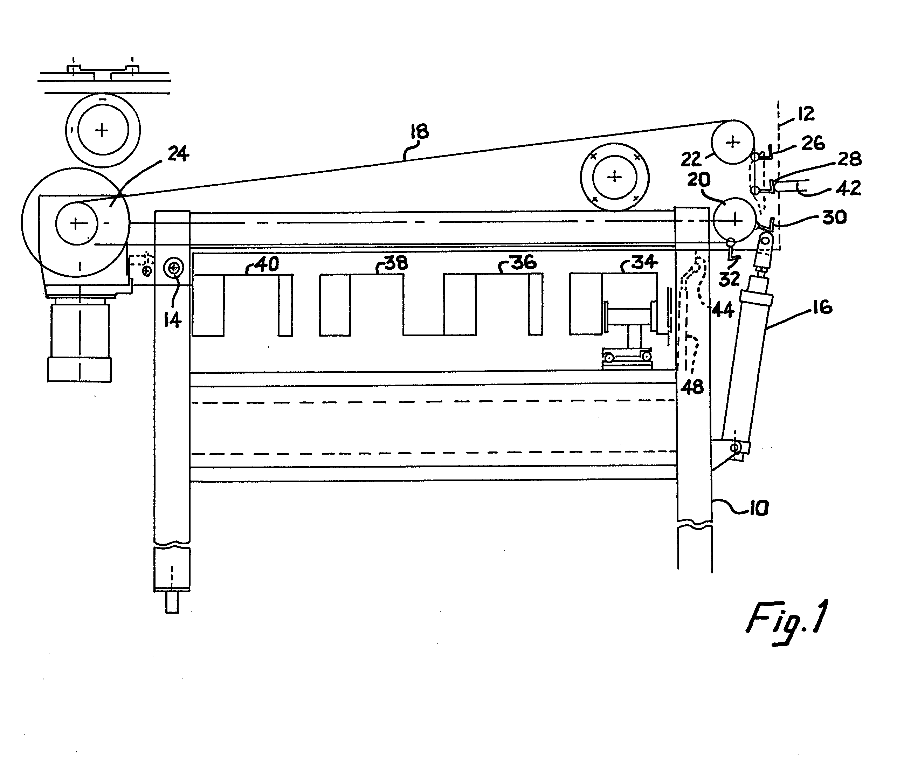

Fig. 1 shows a main frame 10 and a sub-frame 12 pivoted at 14 to the main frame 10 and raisable relative to the main frame 10 by means of pneumatic jacks one of which is shown at 16. The sub-frame 12 carries a transfer conveyor 18 which passes round three rollers 20, 22 and 24. Tension in the conveyor belt 18 is adjustable by adjustment of the roller 22.

The conveyor includes a plurality of catchment fingers or tines arranged in pairs, as shown at 26, 28, 30 and 32, at regular intervals along the length of the conveyor. Each finger is bent into an L-shape, the longer limbs of which extend generally perpendicularly to the run of the conveyor. The latter extends generally vertically between the rollers 22 and 20 so that the L-shaped fingers 26 and 28 define troughs when viewed end-on as in Fig. 1 into which elongate articles presented broadside to the conveyor can drop. The fingers tilt through 90° as the conveyor passes around the lower roller 20 so that whereas the articles initially rest in the troughs they end up resting on the shorter arms of the L-shaped fingers, ready to be slid therefrom in the reverse direction to the movement of the conveyor.

After passing around the roller 20 the conveyor 18 extends generally horizontally to the roller 24 at the opposite end of the frame and the fingers, such as at 32, extend downwardly from the conveyor as previously described, over the entire length of their horizontal run.   A series of output conveyors, of which four are shown in Fig.1, at 34, 36,38 and 40 extend transversely to the rear of the conveyor 18 and an article carried by fingers such as 32 is deposited onto one of these conveyors 34-40 in dependence on the operation of an interception means (to be described).

The apparatus as shown is of particular application to the handling of easily damageable confectionery bars, elongate glass or china objects and other such fragile items, which are fed broadside or approximately half way between the two rollers 20 and 22 from a delivery conveyor 42.

If articles are detected as being unwanted for any reason (e.g. because metal has been detected in foodstuff materials) any such articles are dumped by a preliminary interception device 44 which will be described in more detail in a later Figure.

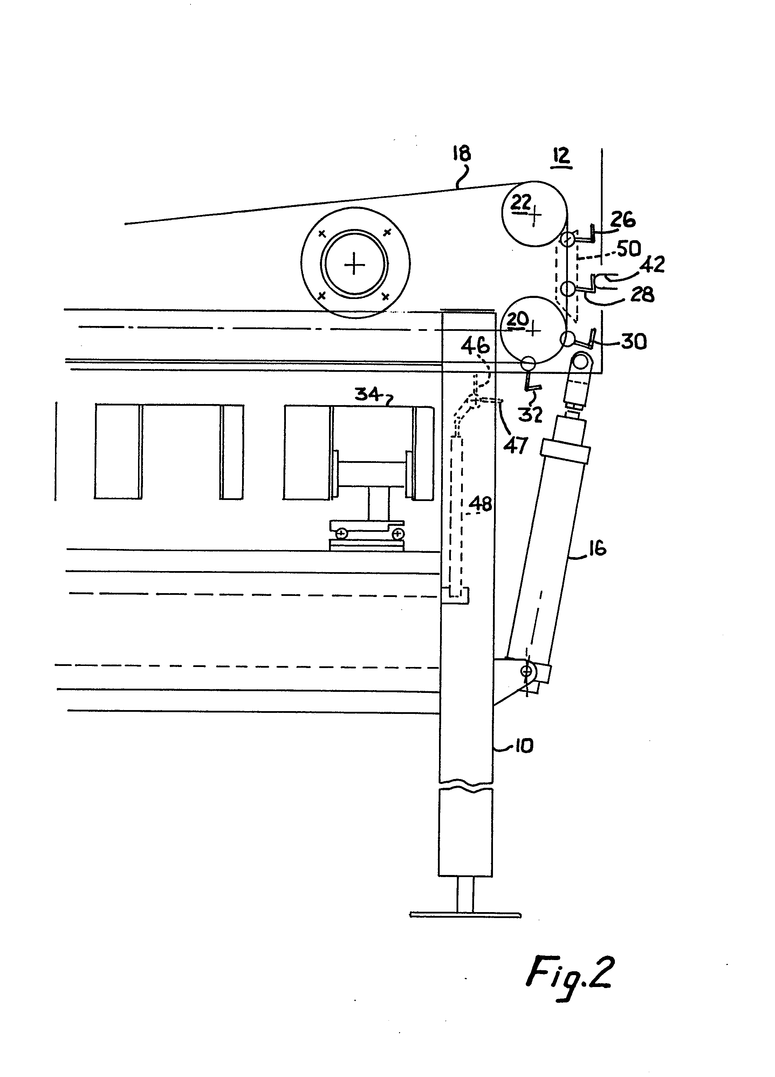

Fig. 2 shows to a larger scale the main integers of the input end of the apparatus shown in Fig. 1 and the same reference numerals have been employed throughout.   In addition the dumping mechanism is shown in more detail as comprising a pivotable interceptor finger 46 movable into the intercepting position shown by retraction of a ram 48. In the extended position of the ram the finger 46 occupies the position shown at 47.

In addition a guide 50 is shown at the loading region of the conveyor 18.

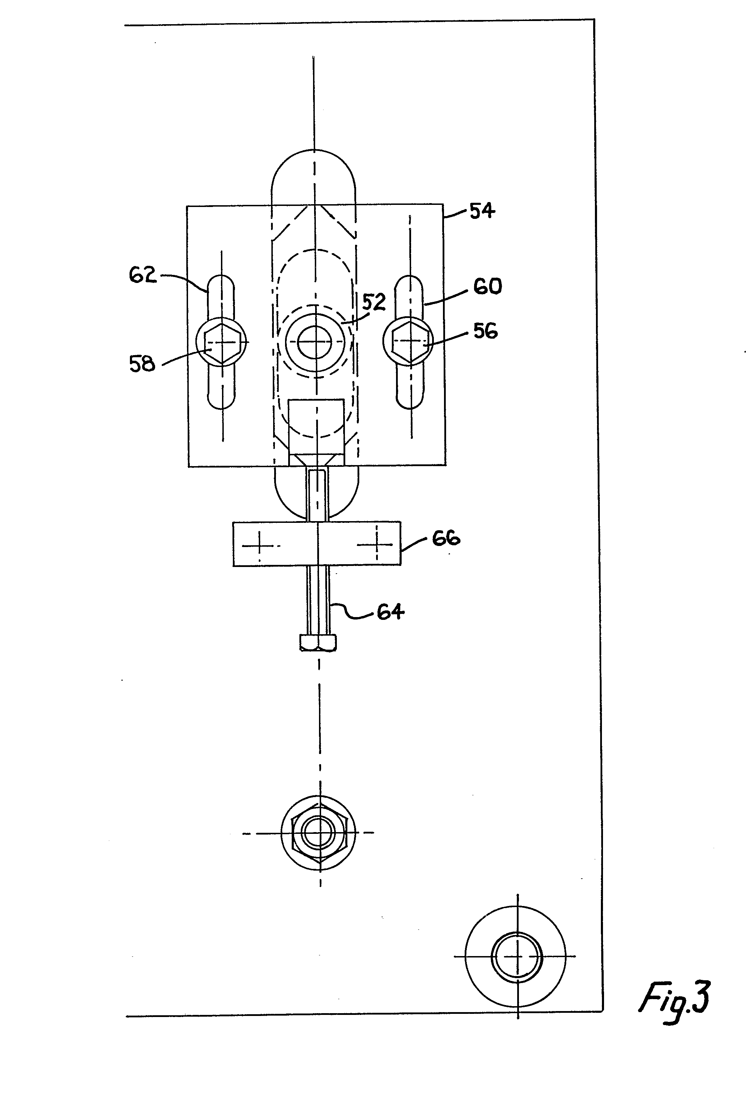

Referring to Fig.3, adjustment of the conveyor tension is achieved by raising the axis of rotation of the roller 22. To this end the opposite ends of an axle 52 on which the roller runs are held captive in bearings, in turn held captive in plates 54 which are secured to the side walls of the subsidiary frame 12 by means of bolts 56, 58 which extend through slots 60 and 62 in the plates. Fine adjustment before the bolts are finally tightened is achieved by adjustment of a screw 64 threadedly engaged in a block 66 and acting on the underside of the plate 54.

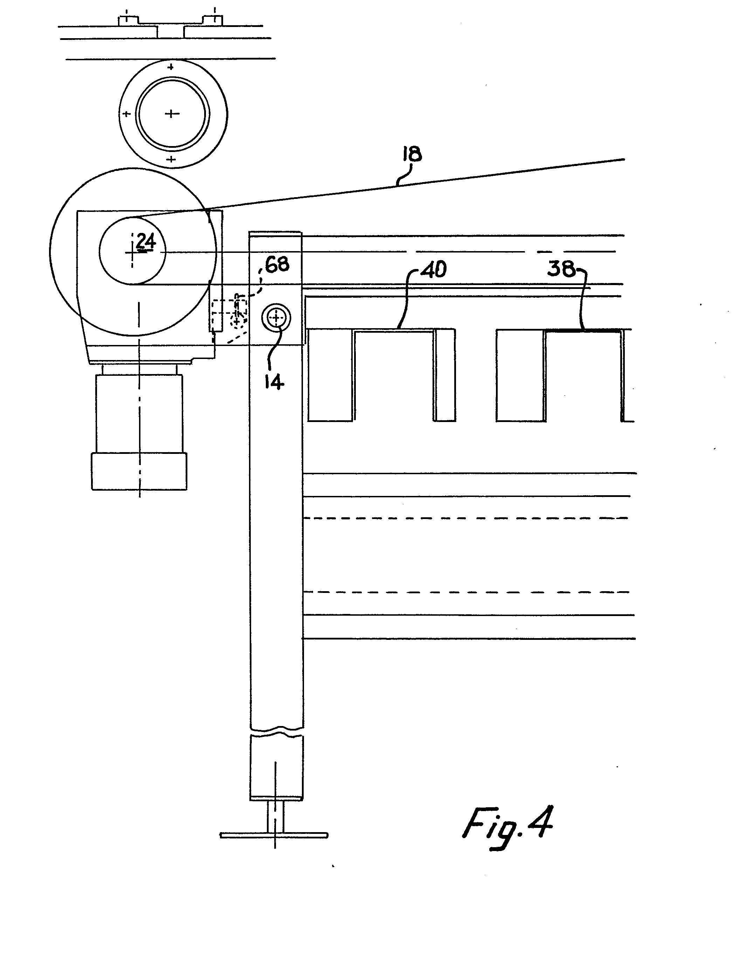

Referring to Fig.4, at the end of the frame assembly further and removed from the inlet is a final interceptor device 68 which causes any articles still remaining on their respective fingers at that stage to be removed and dumped.

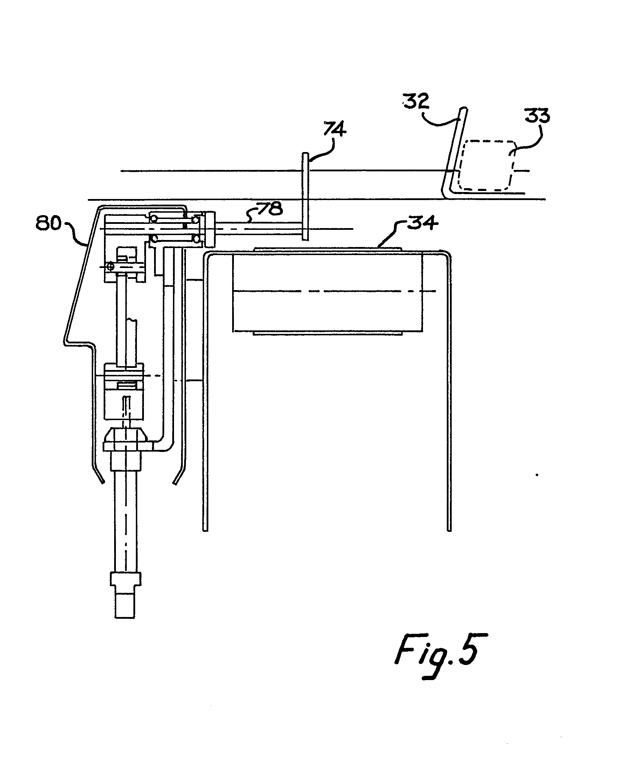

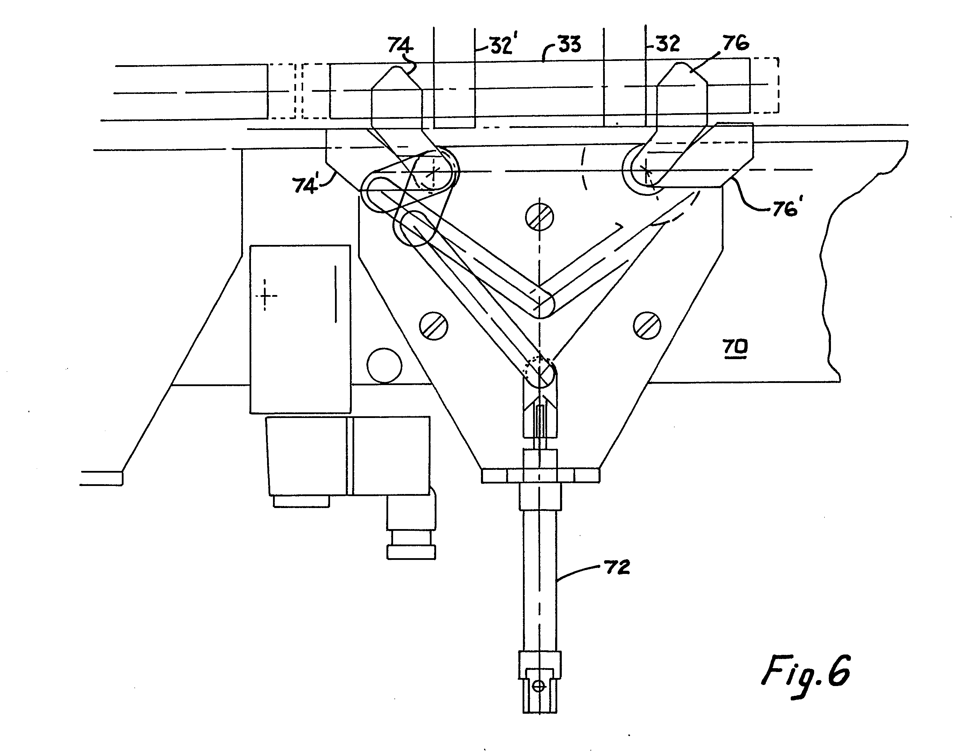

One of the interceptor devices for removing articles from the fingers such as 32 onto one or other of the conveyors 34-40 is shown in Figs. 5 and 6. The device comprises a multiple lever assembly 70 which when raised by a ram 72 carries two lugs 74, 76 to be raised above the level of the fingers 32, 32' (see Fig. 6) to contact, and stop an article 33 carried thereby as the conveyor 18 and the finger 32 move on. The article 33 then drops a short distance onto the conveyor 34. The lower portions of the lugs 74, 76 are shown at 74', 76'. Withdrawal of the ram 72 results in the lugs 74, 76 being lowered and the positions shown at 74' 76' out of the path of the articles such as 33.

One (or more) such intercept devices 70,72 is provided on the downstream side of each output conveyor 34-40 and is arranged as shown in Fig. 5. The lugs 74, 76 are carried by separate shafts of which one is shown at 78.

Over each mechanism is located a cover 80.

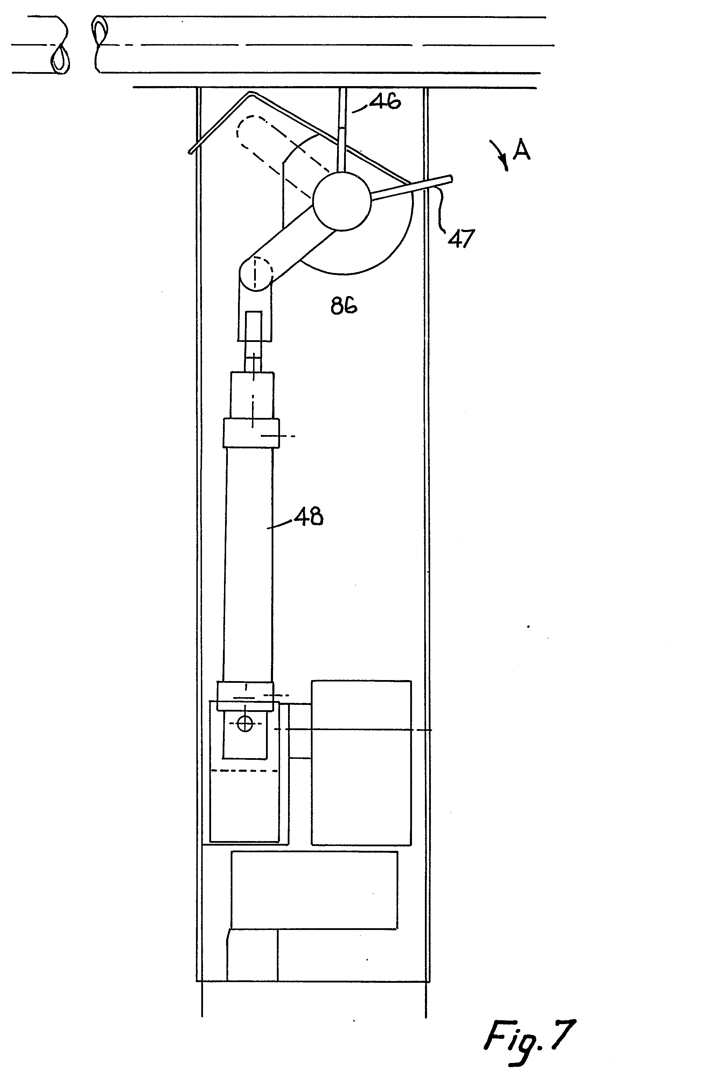

Fig.7 shows to an enlarged scale the preliminary dumping with the finger(s) 46 raised to deflect unwanted articles in the direction of arrow A. The finger is shown in its normal, lowered position at 47, and this position is taken up when the ram 48 is extended.

Since it is desirable that the machine shall be capable of handling a number of articles spaced apart across the width of the incoming delivery conveyor, simultaneously, a corresponding number of pairs of fingers are required along the length of each transverse member making up the transfer conveyor and a corresponding number of fingers are required across the width of the transfer conveyor at the preliminary dumping position of Fig. 2 and at each intercept location including the final dumping position. The fingers 46 at the preliminary dumping position are therefore spaced apart along the length of a foot 86, at positions 87, 88 respectively.

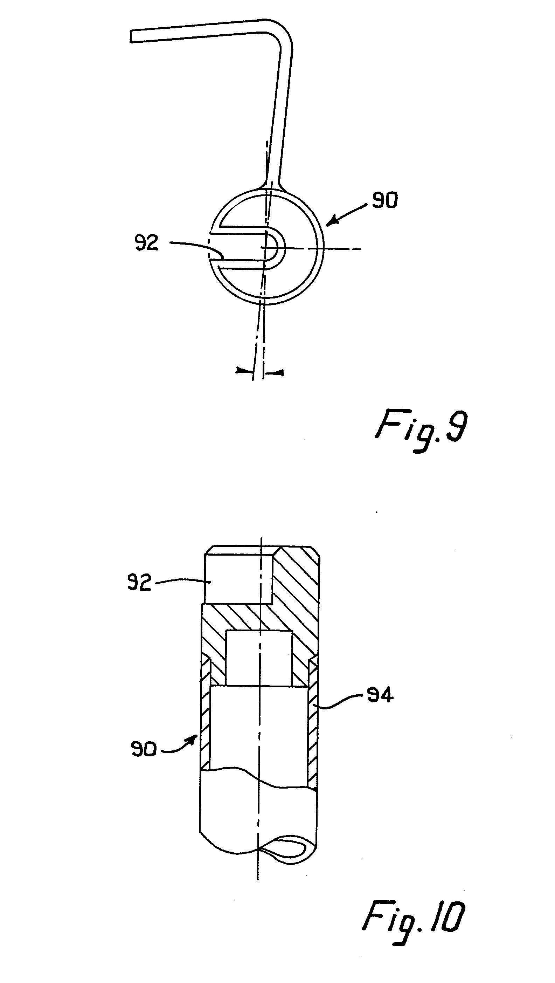

Each of the pairs of fingers making up the catchment means is carried by a transverse conveyor member 90, one end of one of which is shown in Fig. 10. The fingers are arranged in pairs along the length of such a member which is cut away at one end with a slot 92 into which extended pins of a chain (not shown) will fit. To reduce weight the member 90 is conveniently formed over most of its length from a hollow round tube 94.

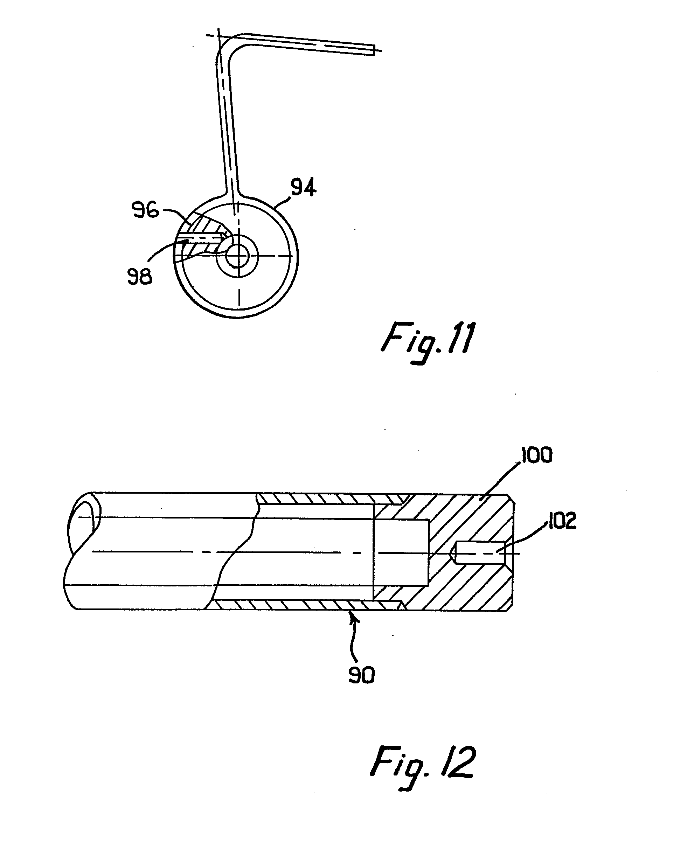

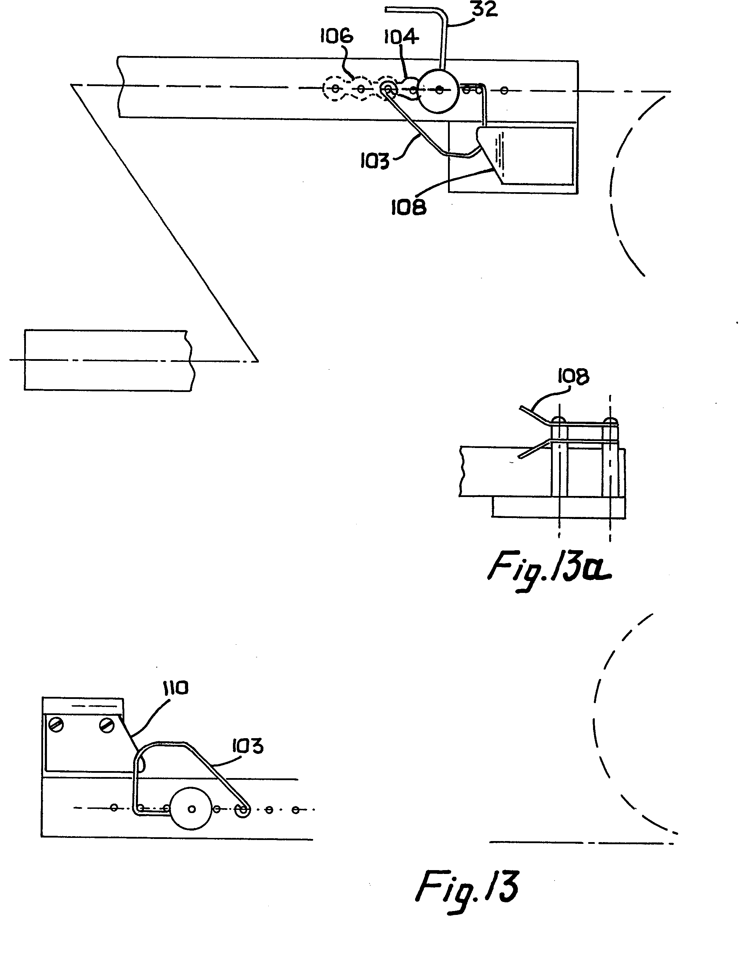

Fig. 11 shows one end region in cross section and shows the fixing of the tube 94 to an end plug 96 and a hole 98 to receive one end of a resilient spring 103, as shown in Figure 13.

Fig. 12 shows a centrally apertured plug 100 at the opposite end of the member 90 for receiving a similar extended pin (not shown) in an aperture 102.

Fig. 13 shows how each member 90 is resiliently mounted by a spring 103 relative to associated chain members 104, 106 so that the fingers 32 will automatically be deflected to prevent jamming.

Alignment guides are provided at 108 to keep the spring 103 correctly aligned relative to the chain (the guide is shown in elevation and, in Figure 13a, in plan). A similar guide is provided on the return path at 110.

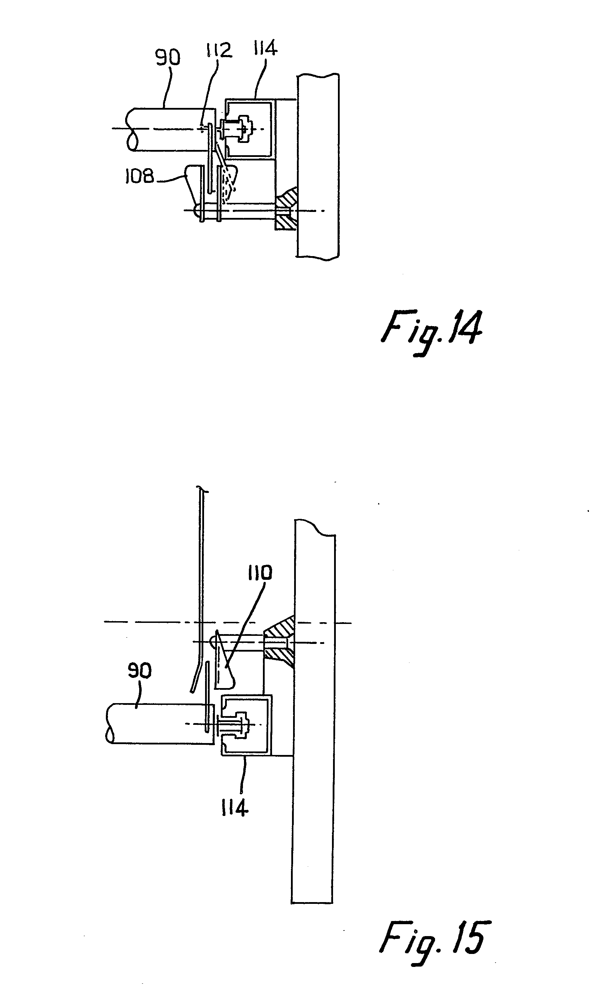

Figs 14 and 15 show the guides and chain mountings in more detail. An extended pin is shown at 112 engaging in one end of rod 90 and the guide or rail for the chain is shown at 114 with the aligning guides shown at 108 and 110.

By providing an appropriate number of interceptor devices across the width of the transfer conveyor below the lower run of the latter, for _each_ output conveyor 80, for example, 4 articles loaded simultaneously broadside on to the transfer conveyor can be simultaneously loaded onto one of any number of different conveyors.

Alternatively the 4 articles may be unloaded separately onto 4 different output conveyors.

It is to be noted that whereas the articles are travelling broadside on to the transfer conveyor 12 or the delivery conveyor 42, they are delivered end on (i.e.parallel to the direction of motion of the input conveyor(s) out of which they are delivered) without any significant sliding or rotation of the article relative to a supporting surface.

In order for the tined conveyor 18 to function effectively, the article(s) should drop into the hooks or fingers 26 to 32 from the delivery conveyor 42 in a reliable way. This requires two things, namely:

- reasonably good arrangement of articles on the conveyor belt 42.

- a control system which times the hooks or fingers 26 to 32 to arrive in the receiving position at the right moment to receive the article(s).

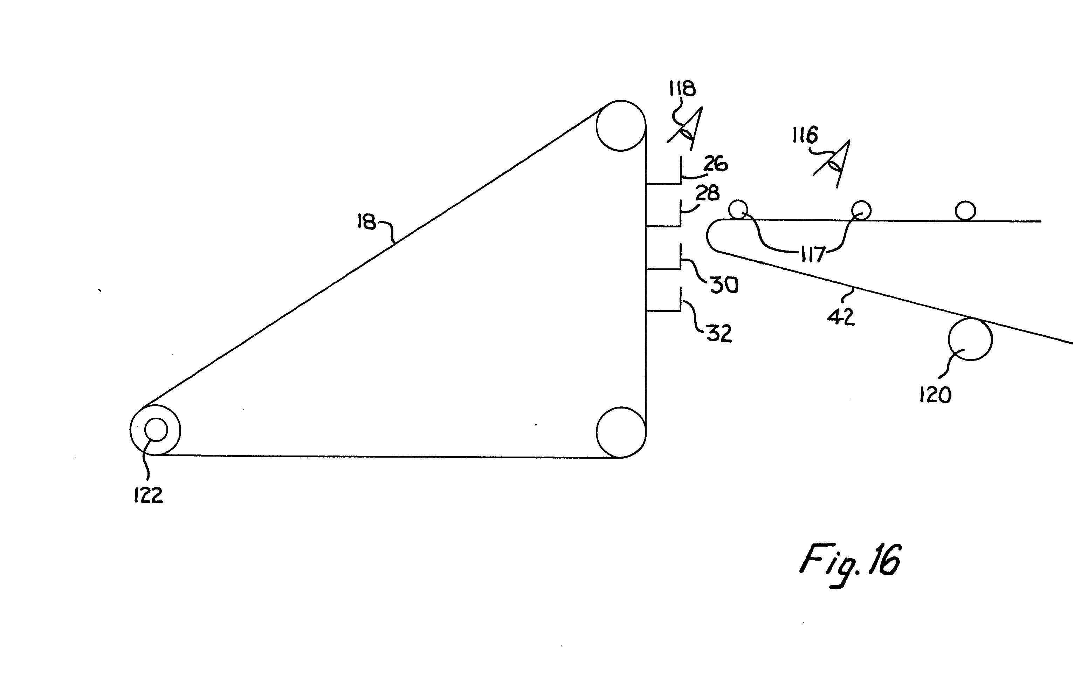

One such control system is shown in Fig.16. The control system of Fig.16 includes two photocells 116, 118 and two encoders 120, 122.

The photocell 116 looks at rows of articles (referenced 117) on the conveyor 42 and registers the position of the rows in time. That is, the photocell 116 specifies the phase angle of the articles 117 and their frequency, say in rows/minute.

The photocell 118 looks at the hooks on the tined conveyor 18 and specifies the phase angle of the tined conveyor 18 and the frequency, say in hooks per minute.

0135977

- 13 -

The encoder 120 measures the instantaneous value of the belt speed of the conveyor 42.

The encoder 122 measures the instantaneous value of the speed of the tined conveyor 18.

The objective is to achieve the following:

- Equalise the running rate of the tined conveyor 18 to the supply rate of the articles 117. That is, to make hooked rows/minute = article rows/ minute.

- Equalise the phase of the hooks and the article rows

This is achieved as follows:

- Measure the article rows/minute. This is achieved by electronically counting the rows of articles for a period of time.

- Measure the hooks/minute electronically by the same method.

- Adjust the speed of the tined conveyor 18 electronically so that it equals the article rows/minute. This speed is hereinafter called set point speed. A variable frequency controller can be used to power the drive motor of the tined conveyor 18.

- The encoders 120,122 are used within the electronic speed adjustment control system. They provide fast

0135977

- 14 -

feedback information in order to enable the system to adjust speeds quickly and in a stable manner. They also enable the system to respond rapidly to changes in the belt speed of the conveyor 42.

The phase is adjusted by offsetting the actual tined conveyor speed from the set point speed by a value which is roughly proportional to the phase error. Thus, when the hooks are in phase with the rows of articles, the offset will be zero and the hooks per minute will equal the rows per minute. When the hooks are advanced in time, the tined conveyor 18 will be slowed down, and when the hooks are retarded, the tined conveyor 18 will be speeded up. The encoders 120,122 enable the electronic control system to correct phase error rapidly, i.e. within the time between two consecutive rows being delivered.

CLAIMS

1.  Apparatus for handling articles and selectively transferring them from movement along one path to movement along one of a plurality of different paths comprising:

1) input means (42) adapted to move articles (33) along the said first path;

2) transfer conveyor (18) means movable past the input means (42) and adapted by means of catchment devices (26, 28, 30, 32) located therealong to receive articles from the input means (42);

3) at least two output paths (34, 36, 38, 40), extending at a different level to the first path and at an angle to the direction thereof, the transfer conveyor means (18) serving to move articles (33) from the input means (42) to a delivery region located above the output paths (34, 36, 38, 40);

4) means (70, 72, 74, 76) operable selectively to intercept the catchment devices (26, 28, 30, 32) as they pass through the delivery region and actuable to cause articles located on the catchment devices to be transferred to one or another of the said output paths (34, 36, 38, 40); and

5) selective control means for selectively enabling operation of the interception means.

2.  Apparatus as claimed in Claim 1, including a plurality of delivery regions for selectively delivering articles (33) to one or another of a plurality of output paths (34, 36, 38, 40).

3. Apparatus as claimed in Claim 1 or Claim 2, including at least one article intercepting means (70, 72, 74, 76) for each output path, each said article intercepting means being separately operable to remove articles from catchment devices of the transfer conveyor as they pass thereover so that selected ones of a plurality of articles located on a corresponding plurality of said catchment devices along the transfer conveyor, can be deposited on to different selected output paths.

4. Apparatus as claimed in any preceding Claim, wherein the output paths are formed by belt conveyors (34, 36, 38, 40).

5. Apparatus as claimed in any preceding Claim, wherein the transfer conveyor means comprises a continuous belt (18) with a plurality of catchment devices (26, 28, 30, 32) regularly spaced around the belt and projecting outwardly of the belt, the devices being open in one direction and closed in two other directions, so that an article will be retained in a device in different orientations of the device.

6. Apparatus as claimed in Claim 5 wherein the catchment devices (26, 28, 30, 32) are L-shaped fingers.

7. Apparatus as claimed in Claim 6, wherein the L-shaped fingers are arranged in pairs, so that each article is supported by a pair of fingers, and has an unsupported region between the fingers.

8.  Apparatus as claimed in any preceding Claim wherein each output path (34, 36, 38, 40) has its own interception means (20, 72, 74, 76).

9.  Apparatus as claimed in Claim 8, wherein each interception means (70, 72, 74, 76) comprises a lug (74) which can be raised into the path of movement of an article (33) retained in a catchment device (32), or can be lowered out of the said path of movement.

10. Apparatus as claimed in any preceding Claim, including means (120, 122) for synchronising the rate of movement of articles along the first path with the rate of movement of the catchment devices (26, 28, 30, 32) past the input means (42).

0135977

Fig.1

*Fig.2*

Fig.3

Fig.4

Fig.5

Fig.6

0135977

0135977

46

A

47

86

48

Fig.7

46

88

46 87

86

*Fig. 8*

-8-

0135977

Fig.9

Fig.10

96

94

98

*Fig.11*

100

102

90

*Fig. 12*

0135977

Fig.13a

Fig.13

Fig.14

Fig.15

118

116

26

28

18

117

30

42

32

120

122

Fig.16

0135977